# EUROPEAN PATENT APPLICATION

(11) **EP 4 709 052 A1**
(43) Date of publication of application: **11.03.2026**
(21) Application number: 25195491.3
(22) Date of filing: 12.08.2025
(51) Int. Cl.: H05B 6/76, H05B 6/64

(54) **HEATING COOKER**

(30) Priority: 04.09.2024 JP 2024152098
(71) Applicant: Sharp Kabushiki Kaisha, Sakai City, Osaka 590-8522 (JP)
(72) Inventor: YACHI, MARIKO, Sakai City, 590-8522 (JP); MORIMOTO, SHIGENORI, Sakai City, 590-8522 (JP); KITAURA, TOMOHIRO, Sakai City, 590-8522 (JP)
(74) Representative: Treeby, Philip David William

(57) **Abstract**

A heating cooker (100) includes a heating chamber (2), electromagnetic wave shielding glass (6), and a connecting portion (60). The heating chamber (2) has a panel member (3) surrounding an inner space (Sp1) capable of accommodating a heating object, and heats a heating object using an electromagnetic wave. The electromagnetic wave shielding glass (6) closes the opening portion (310) formed in a part of the panel member (3). The connecting portion (60) is located on the panel member and electrically connects a metal mesh (63) of the electromagnetic wave shielding glass (6).

## Description

### BACKGROUND OF THE INVENTION

### 1. TECHNICAL FIELD

The present disclosure relates to a heating cooker.

### 2. DESCRIPTION OF THE RELATED ART

As a related art, a heating cooker such as a microwave oven that irradiates a heating object (food) in a heating chamber with an electromagnetic wave to heat the heating object is known (see, for example, JP 2022-187423 A). The heating cooker according to the related art includes an imaging device (camera) that captures (shoots) a heating object in the heating chamber in order to heat the heating object in an excellent manner.

The imaging device is arranged inside a door that opens and closes an opening portion provided on a front surface side of the heating chamber. The door is provided with inner door glass arranged on the inner side of the door and outer door glass arranged on the outer side of the door. The imaging device is fixed to a frame arranged at an upper edge portion of the door, and captures the inside of the heating chamber over transparent electromagnetic wave shielding glass used as the inner door glass through a shooting hole formed at a position facing the inside of the heating chamber.

### SUMMARY OF THE INVENTION

In the configuration of the above related art, since the electromagnetic wave shielding glass is provided on the door and is in an electrically floating state, electromagnetic wave shielding performance by the electromagnetic wave shielding glass is not sufficient, and in some cases, an electromagnetic wave may leak to the outside of the heating chamber through the opening portion including the shooting hole.

An object of the present disclosure is to provide a heating cooker in which an electromagnetic wave is less likely to leak to the outside of a heating chamber.

A heating cooker according to one aspect of the present disclosure includes a heating chamber, electromagnetic wave shielding glass, and a connecting portion. The heating chamber has a panel member surrounding an inner space capable of accommodating a heating object, and heats the heating object using electromagnetic waves. The electromagnetic wave shielding glass closes an opening portion formed in a part of the panel member. The connecting portion is located on the panel member and electrically connects a metal mesh of the electromagnetic wave shielding glass.

According to the present disclosure, it is possible to provide a heating cooker in which an electromagnetic wave is less likely to leak out of a heating chamber.

### BRIEF DESCRIPTION OF THE DRAWINGS

FIG. 1 is a schematic perspective view of a heating cooker according to a first embodiment;
FIG. 2 is a schematic perspective view of a main part of the heating cooker according to the first embodiment as viewed obliquely from below;
FIG. 3 is a schematic perspective view of a main part of the heating cooker according to the first embodiment as viewed obliquely from above;
FIG. 4 is a schematic perspective view of a main part of the heating cooker according to the first embodiment;
FIG. 5 is a schematic exploded perspective view of a main part of the heating cooker according to the first embodiment;
FIG. 6 is a schematic exploded perspective view of a main part of the heating cooker according to the first embodiment;
FIG. 7 is a schematic cross-sectional view of a main part of the heating cooker according to the first embodiment; and
FIG. 8 is a cross-sectional view taken along line A1-A1 of FIG. 7, illustrating a main part of the heating cooker according to the first embodiment.

### DETAILED DESCRIPTION

Hereinafter, an embodiment of the present disclosure will be described with reference to the accompanying drawings. An embodiment below is an example embodying the present disclosure, and is not intended to limit the technical scope of the present disclosure.

### FIRST EMBODIMENT

### [1] GENERAL OUTLINE

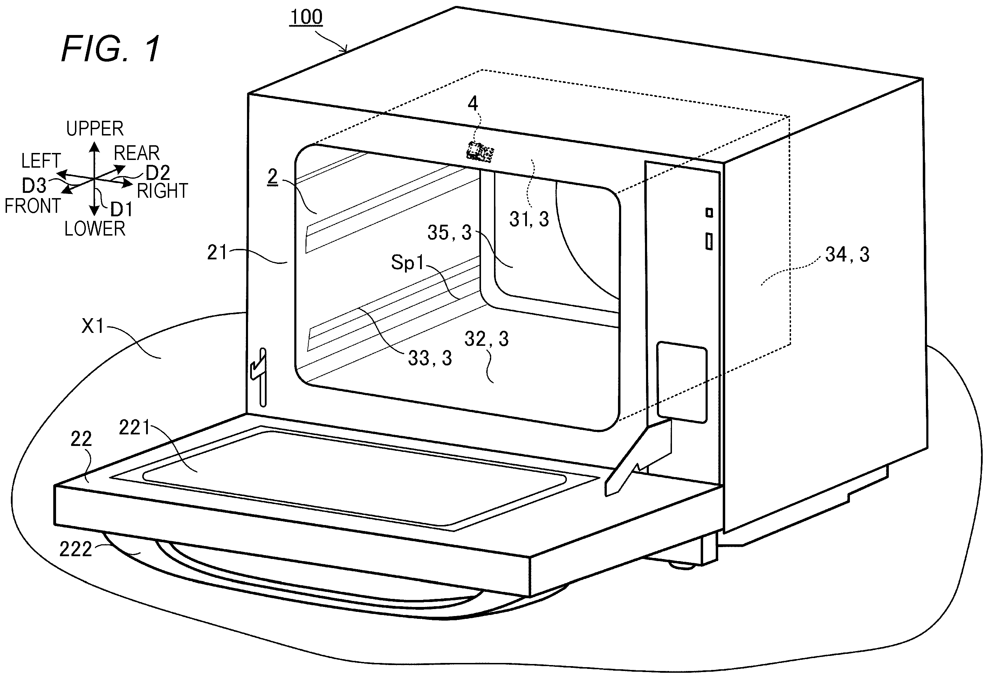

First, an outline of a heating cooker 100 according to the present embodiment will be described with reference to FIG. 1.

The heating cooker 100 according to the present embodiment heats, for example, a food, a food product, a beverage, or various other heating objects. The heating cooker 100 irradiates a heating object in a heating chamber 2 with an electromagnetic wave to heat the heating object, like a microwave oven, for example. The heating cooker 100 only needs to have a function of heating a heating object using at least an electromagnetic wave, and may have, for example, a grill function, an oven function of heating with convective heat, and/or a steam function of heating with water vapor.

The "electromagnetic wave" in the present disclosure means a physical phenomenon in which electromagnetic energy propagates in space while vibrating, and includes a radio wave and light. The heating cooker 100 irradiates a heating object in the heating chamber 2 with a microwave that is an electromagnetic wave of 2.45 MHz as an example. By this, an electromagnetic wave (microwave) vibrates a water molecule and the like in a heating object, and temperature of the entire heating object rises.

There are two types of the heating cooker 100 of this type, that is, "flat table type" and "turn table type". A flat table type heating cooker includes an antenna below a bottom surface of a heating chamber, and irradiates the inside of the heating chamber with an electromagnetic wave from the antenna while rotating the antenna, so as to efficiently diffuse the electromagnetic wave in the heating chamber to evenly heat a heating object. A turn table type heating cooker includes a turn table on which a heating object is placed in a heating chamber, and irradiates the inside of the heating chamber with an electromagnetic wave from a fixed antenna while rotating the turn table, so as to evenly heat a heating object on the turn table. In the present embodiment, as an example, the heating cooker 100 is a flat table type microwave oven.

The heating cooker 100 is, for example, an electric device that operates by receiving power supply from a power system (AC power supply). That is, the heating cooker 100 operates to heat a heating object by irradiating the heating object with an electromagnetic wave by receiving power supply.

As illustrated in FIG. 1, for example, the heating cooker 100 is used while being placed on an installation surface X1 including a shelf, a counter, or the like of a house. The heating cooker 100 stands independently on the installation surface X1 while being placed on the installation surface X1. That is, the heating cooker 100 according to the present embodiment is a self-standing and portable device, and the user can install the heating cooker 100 at an optional position on the installation surface X1.

In the present embodiment, for convenience of description, a vertical direction in a state where the heating cooker 100 can be used is defined as an up-down direction D1. Further, a left-right direction D2 is defined with reference to a direction in which the heating cooker 100 is viewed from the front, and a front-rear direction D3 is defined with the front surface side of the heating cooker 100 as the front side and the rear surface side as the rear side. However, these directions are not intended to limit a use direction (direction at the time of use) of the heating cooker 100.

The heating cooker 100 includes the heating chamber 2 capable of accommodating a heating object, and a heating source for heating the heating object. The heating source irradiates a space (inner space Sp1) in the heating chamber 2 with an electromagnetic wave to heat a heating object accommodated in the heating chamber 2.

In the present embodiment, the heating chamber 2 has a hollow rectangular parallelepiped shape, and includes a box body 21 and a door body 22. The box body 21 is formed in a box shape with one surface (front surface in the present embodiment) opened. The door body 22 is attached to the box body 21 in a state where an opening surface (front surface in the present embodiment) of the box body 21 can be opened and closed.

Here, the door body 22 is supported to be openable and closable with respect to the box body 21 by a support portion (hinge) provided in a lower portion on the front surface side of the box body 21. An upper portion of the door body 22 falls to the front side to be at an open position (see FIG. 1), and stands to the back side to be at a closed position. Furthermore, the door body 22 includes a door window 221 through which the inside of the heating chamber 2 (inner space Sp1) can be visually recognized through the door body 22, and a handle 222 that can be gripped by the user.

The door window 221 includes a double glass structure including inner glass facing the inside (inner space Sp1) of the door body 22 and outer glass facing the outside of the door body 22. The door window 221 includes punching metal which is a metal plate (or a metal sheet) having a large number of holes. Provision of the punching metal prevents an electromagnetic wave from leaking out of the heating chamber 2 through the door window 221.

As illustrated in FIG. 1, when the door body 22 is in an open state (at an open position), the inner space Sp1 in the heating chamber 2 is exposed from the front surface of the box body 21, so that a heating object can be put in and taken out of the heating chamber 2. On the other hand, when the door body 22 is in a closed state (at a closed position), the inner space Sp1 in the heating chamber 2 is in a sealed state, so that a heating object accommodated in the heating chamber 2 can be heated.

Therefore, the user first puts a heating object into the heating chamber 2 with the door body 22 opened, and closes the door body 22. In this state, the heating object in the heating chamber 2 is irradiated with an electromagnetic wave from a heating source so that the heating object is heated. Then, after the heating object is heated, the user opens the door body 22 and takes out the heating object from the heating chamber 2.

Here, the heating chamber 2 includes a panel member 3 surrounding the inner space Sp1. The panel member 3 is a member constituting an inner surface (inner side surface) of the heating chamber 2. An inner surface of the heating chamber 2 includes an upper surface (top surface), a lower surface (bottom surface), a left side surface, a right side surface, a back surface, and a front surface of the inner space Sp1. That is, the panel member 3 is provided at each portion facing the inner space Sp1 of the box body 21 and the door body 22.

In the present embodiment, as an example, as illustrated in FIG. 1, the box body 21 includes a first panel 31, a second panel 32, a third panel 33, a fourth panel 34, and a fifth panel 35 as the panel members 3. The first panel 31 constitutes an upper surface (top surface) of the inner space Sp1, and the second panel 32 constitutes a lower surface (bottom surface) of the inner space Sp1. The third panel 33 constitutes a left side surface of the inner space Sp1, the fourth panel 34 constitutes a right side surface of the inner space Sp1, and the fifth panel 35 constitutes a rear surface of the inner space Sp1.

In other words, a space surrounded by the panel member 3 is an inner space of the heating chamber 2 (that is, the inner space Sp1) capable of accommodating a heating object. The panel member 3 is made from metal so as to reflect an electromagnetic wave emitted into the heating chamber 2. That is, the panel member 3 is made from metal, reflects an electromagnetic wave with which the inner space Sp1 is irradiated, and efficiently irradiates a heating object with an electromagnetic wave.

In the present embodiment, as an example, only the box body 21 is provided with the first panel 31 to the fifth panel 35 as the panel member 3, and each of the first panel 31 to the fifth panel 35 is constituted by a metal plate having predetermined thickness. However, the panel member 3 may be divided into a plurality of members, and for example, the second panel 32, the third panel 33, the fourth panel 34, and the like may be integrally constituted.

Here, at least the first panel 31 to the fifth panel 35 as the panel member 3 are electrically connected to a grounding point electrically connected to, for example, a ground terminal of an outlet with a ground terminal. That is, as the first panel 31 to the fifth panel 35 are grounded, a shielding effect against an electromagnetic wave (here, microwave) is enhanced. Therefore, an electromagnetic wave is shielded by the panel member 3, and hardly leaks to the outside of the heating chamber 2 (to the outside of the inner space Sp1).

Further, the heating cooker 100 according to the present embodiment further includes a power supply unit, an operation unit, a control unit, and the like. Furthermore, the heating cooker 100 further includes various sensors such as a weight sensor and a temperature sensor.

The operation unit is arranged on a front surface of the door body 22, for example. The operation unit includes a plurality of buttons, dials, and the like that can be pressed and operated by the user. The operation unit receives, for example, start and stop of heating of a heating object, setting operation of heating intensity, heating time, and heating mode, and the like.

The control unit is electrically connected to a heating source, a power supply unit, an operation unit, and the like. The control unit mainly includes a computer system including one or more processors such as a central processing unit (CPU) and one or more memories such as a read only memory (ROM) and a random access memory (RAM), and executes various types of processing (information processing). The control unit controls each unit of the heating cooker 100 according to operation of the operation unit.

The heating cooker 100 according to the present embodiment further includes an imaging device 4 that captures the inner space Sp1. The imaging device 4 is a camera including an imaging element (photoelectric conversion element) such as a charge coupled device (CCD) sensor or a complementary metal-oxide-semiconductor (CMOS) sensor. The imaging device 4 including a camera includes an optical system such as a lens in addition to an imaging element, and outputs an image of the inner space Sp1 as needed.

In the present embodiment, the imaging device 4 is connected to the control unit, and an image captured by the imaging device 4 is input to the control unit regularly or irregularly. The control unit performs appropriate image processing on an image of the inside of the heating chamber 2 (inner space Sp1) to monitor a state of the inside of the heating chamber 2 to be used for favorable control of each part of the heating cooker 100.

As an example, the control unit estimates what a heating object accommodated in the heating chamber 2 is, or in what state (presence or absence of a lid) the heating object is accommodated based on an image acquired from the imaging device 4, and automatically sets heating intensity, heating time, a heating mode, and the like. Further, the control unit may use an image acquired from the imaging device 4 to detect whether a heating object is put into or taken out of the heating chamber 2, detect dirt in the heating chamber 2 (or on the door window 221), and monitor other parts (including the outside of the heating chamber 2).

Here, the imaging device 4 is fixed to the panel member 3 surrounding the inner space Sp1 such that the inner space Sp1 is included in a field of view. In the present embodiment, in particular, the imaging device 4 is fixed obliquely downward to the first panel 31 constituting an upper surface (top surface) of the inner space Sp1 of the panel member 3. By this, the imaging device 4 can capture the inner space Sp1 as looking down from obliquely above.

### [2] DETAILED CONFIGURATION AROUND IMAGING DEVICE

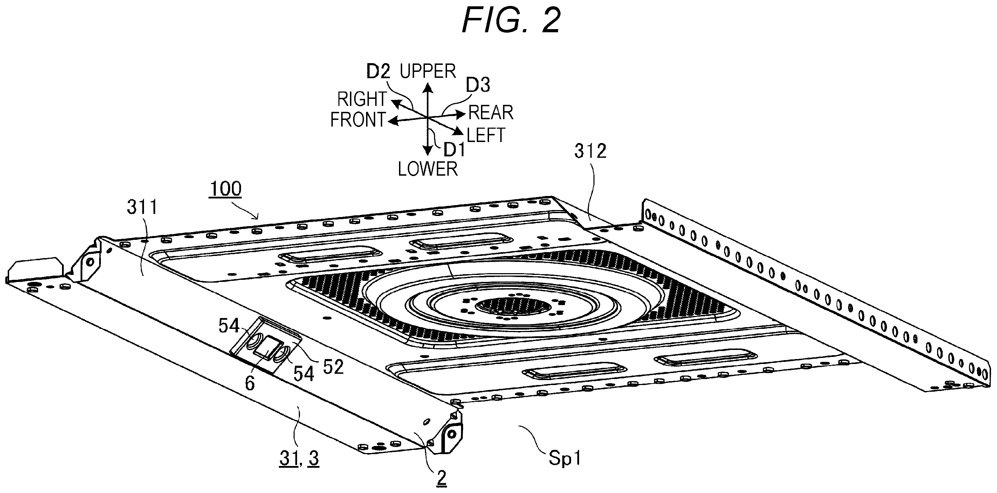

Next, a more detailed configuration around the imaging device 4 (camera) in the heating cooker 100 according to the present embodiment will be described with reference to FIGS. 2 to 8.

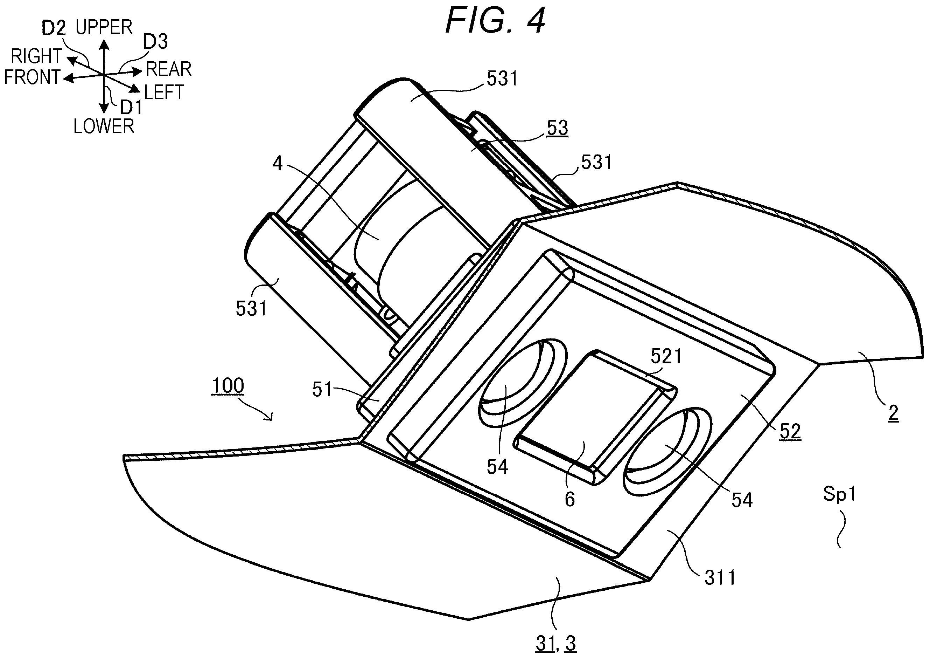

In FIGS. 2 to 8, only the first panel 31 to which the imaging device 4 is fixed, the imaging device 4, and peripheral members of the imaging device 4 such as a chamber outer holder 51 and a chamber inner holder 52 are illustrated, and illustration of other members is appropriately omitted. Further, in FIGS. 4 to 8, only a portion around the imaging device 4 is cut out and illustrated with respect to the first panel 31.

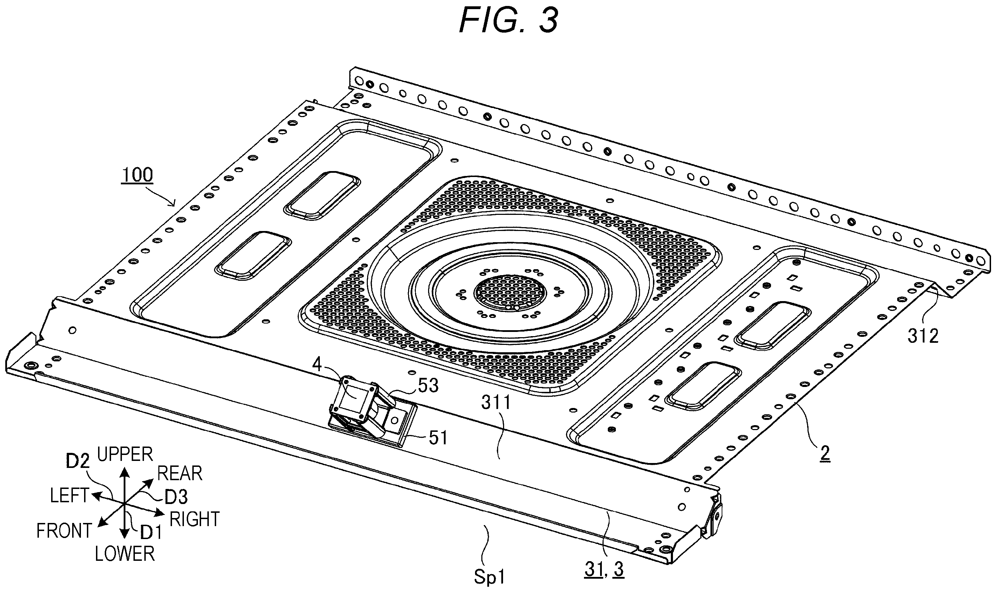

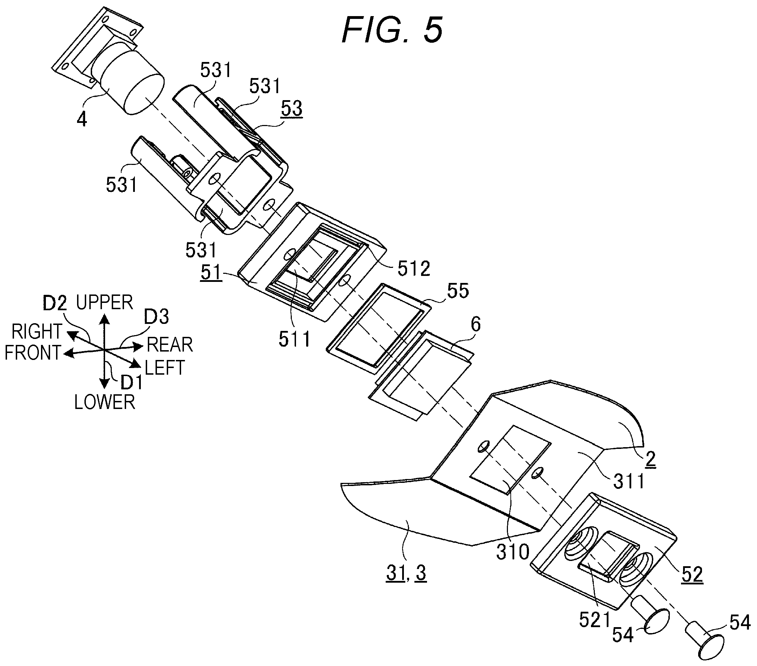

As illustrated in FIGS. 2 and 3, the heating cooker 100 according to the present embodiment includes the chamber outer holder 51, the chamber inner holder 52, a camera holder 53, a screw 54, electromagnetic wave shielding glass 6, and the like. Further, the heating cooker 100 further includes an elastic member 55 (see FIG. 5).

The imaging device 4 is fixed to a central portion in the left-right direction D2 of a front end portion of the first panel 31. Specifically, the first panel 31 is formed by bending a metal plate, and has inclined portions 311 and 312 inclined so as to be lower toward both end sides in the front-rear direction D3 at both end portions in the front-rear direction D3.

The imaging device 4 is supported by the inclined portion 311 on the front side of the first panel 31. More specifically, an opening portion 310 (see FIG. 5) is formed at a central portion in the left-right direction D2 of the inclined portion 311 of the first panel 31. The opening portion 310 is a through hole penetrating (the inclined portion 311 of) the first panel 31 in a thickness direction. Here, as an example, the opening portion 310 is opened in a rectangular shape having length in the left-right direction D2. The imaging device 4 is arranged above the first panel 31, that is, outside the heating chamber 2, at a position corresponding to the opening portion 310.

Further, the imaging device 4 is arranged in a posture in which an optical axis of an optical system is inclined downward (obliquely downward) from a horizontal direction such that the optical axis of the optical system passes through substantially the center of the opening portion 310. In the present embodiment, as an example, the inclined portion 311 is inclined rearward by 45 degrees. For this reason, the imaging device 4 is also arranged in a posture in which an optical axis of the optical system is inclined rearward by 45 degrees with respect to the vertical direction.

By this, the imaging device 4 arranged outside the heating chamber 2 (above the first panel 31) can capture the inside of the heating chamber 2 (inner space Sp1) through the opening portion 310. That is, the imaging device 4 can capture the inner space Sp1 in a bird's-eye view manner from obliquely forward and upward.

In the present embodiment, as illustrated in FIGS. 4 and 5, the imaging device 4 is supported above the first panel 31, that is, outside the heating chamber 2 by the camera holder 53. The camera holder 53 has, around an optical axis of the optical system of the imaging device 4, a plurality of (here, four) leg portions 531 extending along the optical axis. Here, as an example, the camera holder 53 is made from resin (resin molded product).

The camera holder 53 is attached to the panel member 3 from the outside (upper side) of the heating chamber 2 in a posture in which one end (lower end) of a plurality of the leg portions 531 faces the panel member 3 (first panel 31) side, and the imaging device 4 is attached to another end (upper end) of a plurality of the leg portions 531. Specifically, the camera holder 53 is fixed by a pair of the screws 54 so as to sandwich the chamber outer holder 51 between the camera holder 53 and a peripheral portion of the opening portion 310 of the first panel 31. The imaging device 4 is fixed to a plurality of the leg portions 531 by a fastening tool such as a screw.

For this reason, the imaging device 4 is supported by the camera holder 53 in a state of being separated from the panel member 3 (first panel 31) to the outside (upper side) of the heating chamber 2. Furthermore, since a cavity is also secured between a plurality of the leg portions 531 in the camera holder 53, cooling air can pass around the imaging device 4, and a cooling effect of the imaging device 4 can be easily obtained.

The electromagnetic wave shielding glass 6 is arranged so as to close the opening portion 310. The electromagnetic wave shielding glass 6 is glass that has a function of limiting (regulating) transmission of an electromagnetic wave (microwave in the present embodiment) used for heating a heating object. The electromagnetic wave shielding glass 6 is also called electromagnetic wave shield glass, and shields against and/or absorbs an electromagnetic wave in a high frequency band such as a microwave to limit passage of the electromagnetic wave. The electromagnetic wave shielding glass 6 only needs to limit transmission of an electromagnetic wave (microwave), and it is not essential to completely shield an electromagnetic wave.

Here, the electromagnetic wave shielding glass 6 has transmissivity with respect to at least light in a wavelength range in which the imaging device 4 has sensitivity. That is, the electromagnetic wave shielding glass 6 has relatively high transmissivity (transparency) with respect to at least light in a visible light region, but limits transmission of an electromagnetic wave in a high frequency band such as a microwave.

For this reason, when the electromagnetic wave shielding glass 6 closes the opening portion 310, the imaging device 4 can capture the inner space Sp1 over the electromagnetic wave shielding glass 6, that is, through the electromagnetic wave shielding glass 6. On the other hand, the electromagnetic wave shielding glass 6 closes the opening portion 310, so that an electromagnetic wave (microwave in the present embodiment) emitted to the inner space Sp1 can be prevented from leaking to the outside of the heating chamber 2 (outside of the inner space Sp1) through the opening portion 310.

The electromagnetic wave shielding glass 6 is attached to the panel member 3 (first panel 31) so as to be sandwiched between the chamber outer holder 51 and the chamber inner holder 52 in an optical axis direction of the optical system of the imaging device 4. Specifically, both the chamber outer holder 51 and the chamber inner holder 52 are frame-shaped members, and are coupled to each other in a manner sandwiching the electromagnetic wave shielding glass 6 together with a peripheral portion of the opening portion 310 in the first panel 31 between them.

The chamber outer holder 51 is located on the outer side (upper side) of the heating chamber 2 with respect to the first panel 31, and the chamber inner holder 52 is located on the inner side (lower side) of the heating chamber 2 with respect to the first panel 31. In the present embodiment, as an example, both the chamber outer holder 51 and the chamber inner holder 52 are made from resin (resin molded products), and are formed in a rectangular frame shape having length in the left-right direction D2.

Then, the chamber outer holder 51 and the chamber inner holder 52 are fixed by a pair of the screws 54 so as to sandwich a peripheral portion of the opening portion 310 in the first panel 31. In the present embodiment, a pair of the screws 54 are inserted from the inner side of the heating chamber 2, that is, from the chamber inner holder 52, and is fastened to the camera holder 53 through the first panel 31 and the chamber outer holder 51. By this, the chamber outer holder 51 and the chamber inner holder 52 are fixed to the first panel 31 together with the camera holder 53. As a result, the electromagnetic wave shielding glass 6 held in a form of being sandwiched between the chamber outer holder 51 and the chamber inner holder 52 is attached to the panel member 3 (first panel 31) so as to close the opening portion 310.

Here, the chamber outer holder 51 having a frame shape has a through hole 511 opened in a rectangular shape, and the chamber inner holder 52 having a frame shape has a through hole 521 opened in a rectangular shape. For this reason, the electromagnetic wave shielding glass 6 held in a form of being sandwiched between the chamber outer holder 51 and the chamber inner holder 52 is exposed to the outer side (upper side) of the heating chamber 2 through the through hole 511, and is exposed to the inner side (lower side) of the heating chamber 2 through the through hole 521. Therefore, the imaging device 4 can capture the inner space Sp1 over the electromagnetic wave shielding glass 6 through the through hole 511, the opening portion 310, and the through hole 521.

If the electromagnetic wave shielding glass 6 is not grounded or the like and is in an electrically floating state, shielding performance of the electromagnetic wave shielding glass 6 against an electromagnetic wave is not sufficient, and in some cases, there is a possibility that an electromagnetic wave leaks out of the heating chamber 2 through the opening portion 310. Therefore, in the present embodiment, the electromagnetic wave shielding glass 6 is electrically connected to the panel member 3 (the first panel 31) to have the same potential as the panel member 3, so that shielding performance against an electromagnetic wave by the electromagnetic wave shielding glass 6 is improved, and an electromagnetic wave is prevented from leaking out of the heating chamber 2 through the opening portion 310.

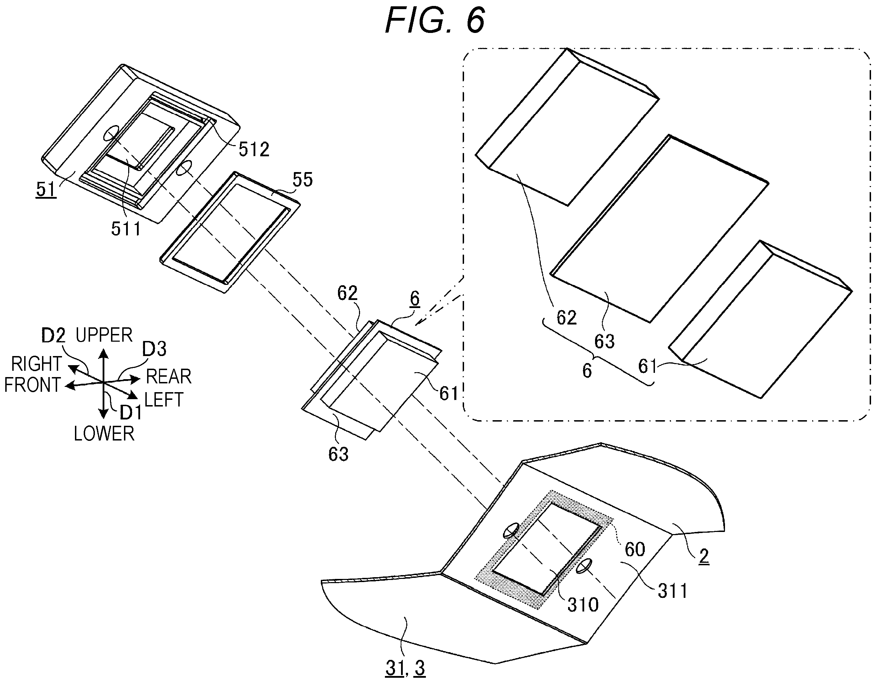

In short, the heating cooker 100 according to the present embodiment includes the heating chamber 2, the electromagnetic wave shielding glass 6, and a connecting portion 60 as illustrated in FIG. 6. The heating chamber has the panel member surrounding the inner space capable of accommodating a heating object, and heats a heating object using an electromagnetic wave. The electromagnetic wave shielding glass 6 closes the opening portion 310 formed in a part of the panel member 3. The connecting portion 60 is located on the panel member 3 and electrically connects a metal mesh 63 of the electromagnetic wave shielding glass 6.

That is, as illustrated in FIG. 6, the electromagnetic wave shielding glass 6 has the metal mesh 63, and the panel member 3 (here, the first panel 31) is provided with the connecting portion 60 (a portion indicated by a lattice hatch in FIG. 6) for electrically connecting the metal mesh 63. The connecting portion 60 only needs to have a structure capable of electrically connecting the metal mesh 63 of the electromagnetic wave shielding glass 6, and is, for example, an electrode, a terminal, or the like.

As described above, as the metal mesh 63 of the electromagnetic wave shielding glass 6 is electrically connected to the panel member 3, the electromagnetic wave shielding glass 6 has the same potential as the panel member 3, and shielding performance against an electromagnetic wave (microwave) by the electromagnetic wave shielding glass 6 is improved. Therefore, the heating cooker 100 according to the present embodiment has an advantage that the electromagnetic wave shielding glass 6 more reliably prevents an electromagnetic wave from leaking out of the heating chamber 2 through the opening portion 310, and an electromagnetic wave is less likely to leak out of the heating chamber 2.

In the present embodiment, the opening portion 310 is provided to allow the imaging device 4 arranged on the outer side of the heating chamber 2 to capture the inner space Sp1. That is, the heating cooker 100 includes the imaging device 4 that is arranged on the outer side of the heating chamber 2 and captures the inner space Sp1 through the electromagnetic wave shielding glass 6.

In short, an electromagnetic wave can be prevented from leaking through the opening portion 310 as the opening portion 310 is closed with the electromagnetic wave shielding glass 6 and the metal mesh 63 is electrically connected to the panel member 3 while the imaging device 4 can capture the inner space Sp1.

In particular, in the present embodiment, since the panel member 3 (first panel 31) is grounded, the metal mesh 63 of the electromagnetic wave shielding glass 6 is also grounded. For this reason, the electromagnetic wave shielding glass 6 also has an improved shielding effect against an electromagnetic wave (microwave in this case), so that an electromagnetic wave is less likely to leak out of the heating chamber 2 through the opening portion 310.

More specifically, as illustrated in FIG. 6, the electromagnetic wave shielding glass 6 is a glass member in which the metal mesh 63 is integrated with the glass panel 61 having a rectangular plate shape. The metal mesh 63 is a metal member for attenuating an electromagnetic wave, and is formed in a mesh shape by relatively thin metal wires. The metal mesh 63 is bonded (joined) to the glass panel 61 with an adhesive or the like, or joined to the glass panel 61 by plating, so as to be integrated with the glass panel 61.

An opening ratio of the metal mesh 63 is higher than an opening ratio (for example, 50% or less) of punching metal provided on the door window 221, and is, for example, 60% or more. More preferably, an opening ratio of the metal mesh 63 is 65% or more, 70% or more, or 75% or more, and may be 80% or more. In the present embodiment, as an example, an opening ratio of the metal mesh 63 is assumed to be approximately 78%. The metal mesh 63 having such a high opening ratio appears to be transparent (substantially transparent) because a metal wire forming the mesh is thin, and the electromagnetic wave shielding glass 6 having the metal mesh 63 also appears to be transparent (substantially transparent).

In the present embodiment, in particular, as illustrated in FIG. 6, the electromagnetic wave shielding glass 6 includes the metal mesh 63 and a pair of the glass panels 61 and 62 sandwiching the metal mesh 63. That is, the electromagnetic wave shielding glass 6 is configured such that the metal mesh 63 is sandwiched between the glass panel 61 located on the inner side (lower side) of the heating chamber 2 and the glass panel 62 located on the outer side (upper side) of the heating chamber 2. As described above, since the electromagnetic wave shielding glass 6 has a plurality of the glass panels 61 and 62, strength as the electromagnetic wave shielding glass 6 can be improved, and the metal mesh 63 can be protected.

Each of a pair of the glass panels 61 and 62 is tempered glass having sufficient heat resistance and durability, and is formed in a rectangular shape slightly smaller than the metal mesh 63 and having length in the left-right direction D2. In the present embodiment, a pair of the glass panels 61 and 62 have the same shape and thickness, but the present invention is not limited to this, and a pair of the glass panels 61 and 62 may have different shapes and/or thicknesses.

Here, the metal mesh 63 is bonded to a pair of the glass panels 61 and 62 with a special adhesive layer having an electromagnetic wave absorbing function interposed between them. By this, as the electromagnetic wave shielding glass 6, it is possible to enhance electromagnetic wave shielding performance while maintaining high light transmissivity which is a characteristic of glass. As an example, the electromagnetic wave shielding glass 6 has electromagnetic wave absorption performance of 20dB and electromagnetic wave shielding performance of about 60dB with respect to an electromagnetic wave of 915 MHz.

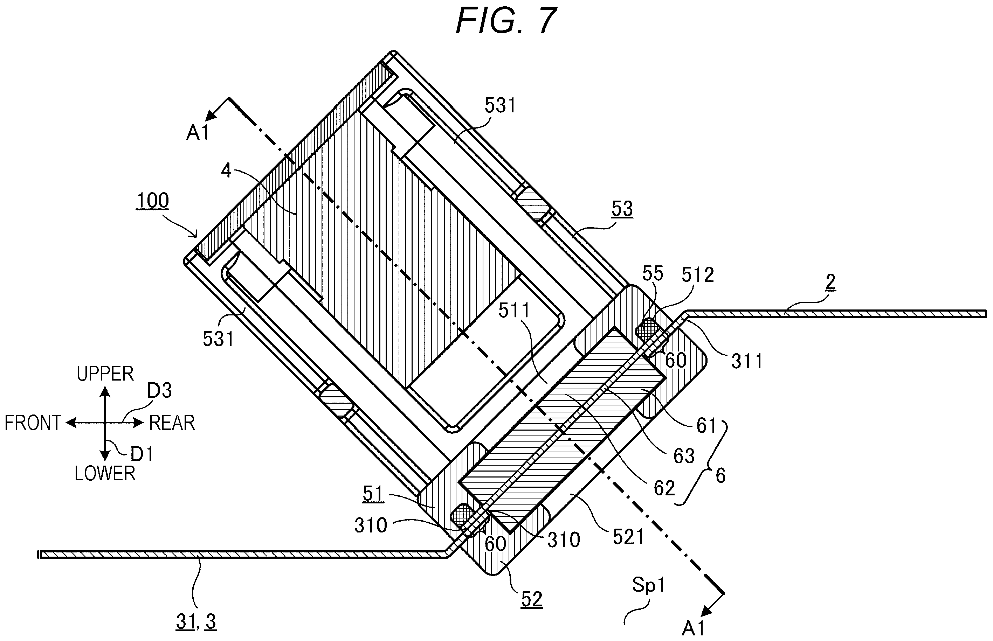

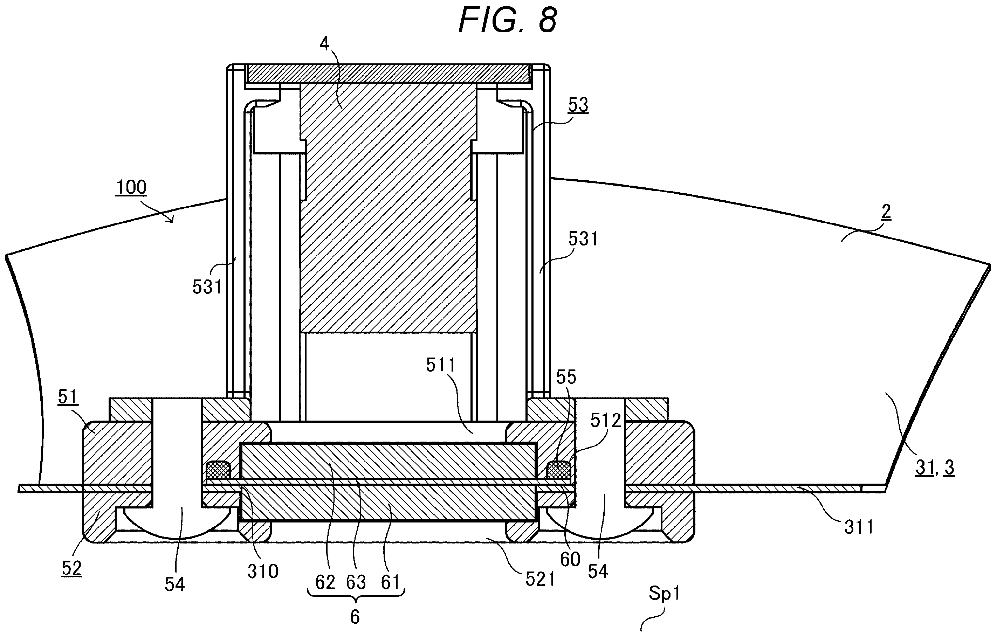

Further, of a pair of the glass panels 61,62, one glass panel, the glass panel 61, is arranged on the inner side of the heating chamber 2, and the other glass panel, the glass panel 62, is arranged on the outer side of the heating chamber 2. Specifically, as illustrated in FIGS. 7 and 8, a pair of the glass panels 61 and 62 are formed in a rectangular shape slightly smaller than the opening portion 310 so as to be fittable into the opening portion 310. A pair of the glass panels 61 and 62 are arranged so as to be accommodated in the opening portion 310, so that one of them, the glass panel 61, protrudes from the panel member 3 to the inner side of the heating chamber 2, and the other one, the glass panel 62, protrudes from the panel member 3 to the outer side of the heating chamber 2.

With such arrangement of a pair of the glass panels 61 and 62, the metal mesh 63 sandwiched between a pair of the glass panels 61 and 62 can be brought into direct contact with the panel member 3. As a result, it is easy to prevent an electromagnetic wave from leaking from a gap between the metal mesh 63 and the panel member 3.

Further, the metal mesh 63 protrudes over the entire circumference from one of the glass panels, the glass panel 61. That is, when viewed from the inner side of the heating chamber 2, the metal mesh 63 protrudes from the glass panel 61 located in front of the metal mesh 63 over the entire circumference. Specifically, the metal mesh 63 is formed in a rectangular shape slightly larger than the opening portion 310.

As described above, since the metal mesh 63 protrudes from the glass panel 61 over the entire circumference, it is possible to bring the metal mesh 63 into contact with the panel member 3 over the entire circumference of the opening portion 310. As a result, it is easy to prevent an electromagnetic wave from leaking from a gap between the metal mesh 63 and the panel member 3.

Furthermore, the connecting portion 60 is arranged on a surface on the outer side of the heating chamber 2 in the panel member 3. That is, the connecting portion 60 is provided on a surface (upper surface) on the side opposite to the inner space Sp1 of the first panel 31. For this reason, the metal mesh 63 can be connected to the connecting portion 60 from the outer side of the heating chamber 2 (first panel 31) in the panel member 3.

By this, there is an advantage that the connecting portion 60 is hardly affected by an electromagnetic wave. That is, the connecting portion 60 is less likely to be exposed to an electromagnetic wave as compared with a case where the connecting portion 60 is arranged at a position facing the inside of the heating chamber 2.

Here, as illustrated in FIG. 6, the connecting portion 60 is arranged over the entire circumference of the opening portion 310 of the panel member 3 on a surface on the side opposite to the inner space Sp1 of the first panel 31. That is, a rectangular frame-shaped region surrounding the opening portion 310 around the opening portion 310 in the first panel 31 is the connecting portion 60. The metal mesh 63 of the electromagnetic wave shielding glass 6 is in contact with the connecting portion 60, so that the metal mesh 63 is electrically connected to the panel member 3 (first panel 31).

As a joining part of the connecting portion 60 and the metal mesh 63, various parts such as bonding, adhesion, and welding can be employed. Specifically, the connecting portion 60 may be joined to the metal mesh 63 by bonding the connecting portion 60 to the metal mesh 63 with conductive paste, or the connecting portion 60 and the metal mesh 63 may be joined by welding the metal mesh 63 to the connecting portion 60. Alternatively, the connecting portion 60 and the metal mesh 63 may be electrically connected via a bump, a bonding wire, or the like.

In the present embodiment, the connecting portion 60 and the metal mesh 63 are joined by bonding using the elastic member 55.

That is, as illustrated in FIGS. 6 to 8, the elastic member 55 is interposed between the chamber outer holder 51 and the metal mesh 63. The elastic member 55 has elasticity and is formed in a frame shape. In the present embodiment, as an example, the elastic member 55 is made from rubber (rubber packing), and is formed in a rectangular frame shape having length in the left-right direction D2. Since the elastic member 55 is located between the chamber outer holder 51 and the metal mesh 63, the metal mesh 63 is pressed against the connecting portion 60 by the elastic member 55 and is bonded to the connecting portion 60.

In short, the heating cooker 100 includes the elastic member 55 that bonds the metal mesh 63 to the connecting portion 60. By this, the metal mesh 63 and the connecting portion 60 can be connected with low impedance. Furthermore, for example, even if vibration or the like is applied to the panel member 3, a connection state between the metal mesh 63 and the connecting portion 60 is easily maintained.

In particular, in the present embodiment, the connecting portion 60 is arranged over the entire circumference of the opening portion 310 of the panel member 3. The elastic member 55 bonds the metal mesh 63 to the connecting portion 60 over the entire circumference of the opening portion 310 of the panel member 3. That is, the metal mesh 63 can be bonded over the entire circumference of the opening portion 310 with respect to the connecting portion 60 formed on the entire circumference of the opening portion 310 by the elastic member 55 having a rectangular frame shape. By this, the metal mesh 63 can be connected to the connecting portion 60 without a gap around the opening portion 310 so as to surround the opening portion 310. For this reason, it is easy to prevent an electromagnetic wave from leaking from a gap between the metal mesh 63 and the connecting portion 60.

Furthermore, the elastic member 55 is arranged in a recessed portion 512 (see FIG. 6) of a holder (the chamber outer holder 51) fixed to the panel member 3. That is, the recessed portion 512 having a groove shape is provided so as to surround the through hole 511 on a surface (lower surface) facing the metal mesh 63 of the chamber outer holder 51. Depth of the recessed portion 512 is set to be smaller than thickness of the elastic member 55. When the elastic member 55 is accommodated in the recessed portion 512, a shape of the elastic member 55 is maintained, and the elastic member 55 is also positioned.

### [3] VARIATION

Hereinafter, a variation of the first embodiment will be listed. Variations described below can be appropriately combined and applied.

It is not essential for the electromagnetic wave shielding glass 6 to have a plurality of layers (a pair) of the glass panels 61 and 62, and may have a configuration in which the metal mesh 63 is joined to one surface of a single layer (one) of the glass panel 61.

Further, the opening portion 310 only needs to be arranged at any position of the panel member 3, and may be provided, for example, in a rear end portion of the first panel 31, or may be provided in the second panel 32, the third panel 33, the fourth panel 34, or the fifth panel 35. Furthermore, in a case where the imaging device 4 is arranged on the door body 22, the opening portion 310 may be provided in a panel member constituting an inner surface of the door body 22.

Further, it is not essential for the metal mesh 63 to protrude over the entire circumference from the glass panel 61, and the metal mesh 63 may partially protrude from the outer circumference of the glass panel 61.

Further, it is not essential for the connecting portion 60 to be arranged over the entire circumference of the opening portion 310 of the panel member 3, and the connecting portion 60 may be partially arranged around the opening portion 310 of the panel member 3.

Further, it is not essential for the connecting portion 60 to be arranged on a surface on the outer side of the heating chamber 2 in the panel member 3. For example, the connecting portion 60 may be arranged on a surface on the inner side of the heating chamber 2 in the panel member 3.

Further, various components such as the chamber outer holder 51, the chamber inner holder 52, and the camera holder 53 are not limited to those made from resin, and for example, at least a part of such components may be made from metal or the like.

Further, the elastic member 55 is not limited to one that is made from rubber, and may include, for example, a leaf spring, a coil spring, or another elastic body.

### SUPPLEMENTARY NOTE OF INVENTION

Hereinafter, an outline of the invention extracted from the above-described embodiment will be additionally described. Note that each configuration and each processing function described in a supplementary note below can be selected and optionally combined.

### SUPPLEMENTARY NOTE 1

A heating cooker including:
a heating chamber including a panel member surrounding an inner space capable of accommodating a heating object, the heating chamber being configured to heat the heating object by using an electromagnetic wave;
electromagnetic wave shielding glass that closes an opening portion formed in a part of the panel member; and
a connecting portion located on the panel member and electrically connecting a metal mesh of the electromagnetic wave shielding glass.

### SUPPLEMENTARY NOTE 2

The heating cooker according to Supplementary note 1, in which the electromagnetic wave shielding glass includes the metal mesh and a pair of glass panels sandwiching the metal mesh.

### SUPPLEMENTARY NOTE 3

The heating cooker according to Supplementary note 2, in which one glass panel of the pair of glass panels is arranged on an inner side of the heating chamber, and another glass panel of the pair of glass panels is arranged on an outer side of the heating chamber.

### SUPPLEMENTARY NOTE 4

The heating cooker according to Supplementary note 2 or 3, in which the metal mesh protrudes from the one glass panel over an entire circumference.

### SUPPLEMENTARY NOTE 5

The heating cooker according to any of Supplementary notes 1 to 4, further including an elastic member that bonds the metal mesh to the connecting portion.

### SUPPLEMENTARY NOTE 6

The heating cooker according to Supplementary note 5, in which
the connecting portion is arranged over an entire circumference of the opening portion of the panel member, and
the elastic member bonds the metal mesh to the connecting portion over an entire circumference of the opening portion of the panel member.

### SUPPLEMENTARY NOTE 7

The heating cooker according to Supplementary note 5 or 6, in which the elastic member is arranged in a recessed portion of a holder fixed to the panel member.

### SUPPLEMENTARY NOTE 8

The heating cooker according to any of Supplementary notes 1 to 7, in which the connecting portion is arranged on a surface on an outer side of the heating chamber of the panel member.

### SUPPLEMENTARY NOTE 9

The heating cooker according to any of Supplementary notes 1 to 8, further including an imaging device that is arranged on an outer side of the heating chamber and captures the inner space through the electromagnetic wave shielding glass.

## Claims

1. A heating cooker (100) comprising:
a heating chamber (2) including a panel member (3) surrounding an inner space (Sp1) capable of accommodating a heating object, the heating chamber (2) being configured to heat the heating object by using an electromagnetic wave;
electromagnetic wave shielding glass (6) that closes an opening portion (310) formed in a part of the panel member (3); and
a connecting portion (60) located on the panel member (3) and electrically connecting a metal mesh (63) of the electromagnetic wave shielding glass (6).

2. The heating cooker (100) according to claim 1, wherein the electromagnetic wave shielding glass (6) includes the metal mesh (63) and a pair of glass panels (61, 62) sandwiching the metal mesh (63).

3. The heating cooker (100) according to claim 2, wherein one glass panel of the pair of glass panels (61, 62) is arranged on an inner side of the heating chamber (2), and another glass panel of the pair of glass panels (61, 62) is arranged on an outer side of the heating chamber (2).

4. The heating cooker (100) according to claim 2 or 3, wherein the metal mesh (63) protrudes from the one glass panel (61, 62) over an entire circumference.

5. The heating cooker (100) according to any one of claims 1 to 3, further comprising an elastic member (55) that bonds the metal mesh (63) to the connecting portion (60).

6. The heating cooker (100) according to claim 5, wherein
the connecting portion (60) is arranged over an entire circumference of the opening portion (310) of the panel member (3), and
the elastic member (55) bonds the metal mesh (63) to the connecting portion (60) over an entire circumference of the opening portion (310) of the panel member (3).

7. The heating cooker (100) according to claim 5, wherein the elastic member is arranged in a recessed portion (512) of a holder fixed to the panel member (3).

8. The heating cooker (100) according to any one of claims 1 to 3, wherein the connecting portion (60) is arranged on a surface on an outer side of the heating chamber (2) of the panel member (3).

9. The heating cooker (100) according to any one of claims 1 to 3, further comprising an imaging device (4) that is arranged on an outer side of the heating chamber (2) and captures the inner space (Sp1) through the electromagnetic wave shielding glass (6).
